# EUROPEAN PATENT APPLICATION

(11) **EP 2 233 812 A1**
(43) Date of publication of application: **29.09.2010**
(21) Application number: 10003200.2
(22) Date of filing: 25.03.2010
(51) Int. Cl.: F16L 11/08, B29D 23/00, B29C 47/02, B29C 53/58, B29C 63/06

(54) **Flexible hose with ornamental figures, method for manufacturing said tubes and plant for decorating flexible hoses**

(30) Priority: 25.03.2009 EP 09004252
(71) Applicant: FITT SPA, 36066 Sandrigo (Vicenza) (IT)
(72) Inventor: Mezzalira, Alessandro, 36066 Sandrigo (Vicenza) (IT); Vigolo, Valentino, 36030 Caldogno (Vicenza) (IT)
(74) Representative: Maroscia, Antonio

(57) **Abstract**

A flexible irrigation hose comprises at least one tubular layer (2) made of a first polymeric material having an outer surface (3) with a plurality of decorative elements (4) stably associated therewith. The decorative elements (4) consist of at least one sheet layer made of a second pigmented material. A method and a plant for decorating a flexible irrigation hose.

## Description

### Field of the invention

The present invention generally finds application in the field of flexible hoses, and particularly relates to flexible hose having decorative elements on its exposed surface.

The invention also relates to a method for applying decorative elements to a flexible hose, as well as a plant for implementing the method.

### Background art

Irrigation pipes, preferably flexible hoses generally comprise one or more tubular superposed layers, at least partially formed of a thermoplastic polymeric material.

Prior art hoses typically have an exposed outer pigmented surface, generally of monochromatic or polychromatic type, having figurative marks or symbols reproduced thereon, for technical and/or commercial information.

Such prior art hoses are not particularly attractive for users of all ages, especially children.

The industry generally requires the package in which the hose is wrapped to convey advertising messages and/or more or less attractive decorations. Nevertheless, once the package is removed, the exposed surface of the hose is wholly insignificant and has no attractiveness that might motivate the user to use the hose.

Solutions are further known in which decorations are applied to the outer surfaces of tubular polymeric elements, not specially designed for irrigation.

German utility model DE 10 2006 011619 discloses an apparatus for decorating tubular containers for cosmetic products or the like, which comprises a decorating station immediately downstream from the station in which the tubular container is extruded, for applying a decorative strip to its outer surface.

The strip is applied to the outer surface of the hose using various techniques, such as chemical bonding or thermal bonding,

One drawback of these prior art solutions is that the decorative elements are not integral with the hose, and may be easily separated from the outer surface of the tubular support.

Accordingly, these solutions are not suitable for use in applications such as irrigation hoses which, in operation, may be exposed to scratching and slipping against possibly very rough surfaces.

Furthermore, these prior art solutions require the application of a whole decorative strip, and hence the resulting decoration has a continuous aspect, with no possibility of customizing it by ornamental patterns of various shapes and/or colors. Therefore, the final product is still poorly attractive.

Another important drawback is that in these prior art solutions the decorative strip is applied in one direction only, parallel to the hose feed direction.

Therefore, multiple parallel applications are required to obtain a decorative effect that also develops in the radial direction, which obviously increases processing costs and times.

### Disclosure of the invention

The object of this invention is to overcome the above drawbacks, by providing a flexible irrigation hose particularly attractive to all users, both adults and children.

Another object of the invention is to provide a flexible irrigation hose having decorations on its exposed surface, and whose aesthetic quality is maintained even after long use.

A further object is to provide a method for decorating flexible irrigation hoses that is particularly quick, inexpensive and effective.

Yet another object is to provide a system for decorating flexible irrigation hoses that affords stable coupling between the decorative elements and the hose.

These and other objects, as better explained hereafter, are fulfilled by a hose as defined in claim 1.

With this combination of features, the hose of the invention will be particularly attractive to users, and particularly to children, even when it is separated from its package.

Due to its particular configuration, it will motivate children to join adults in irrigation works, and more generally to exercise and outdoor activities.

While the hose of the invention has a particularly attractive appearance, it will still have the technical features of an irrigation hose, and may be used by both adults and children for ordinary gardening work.

Furthermore, the compatibility of the pigmented material will afford a highly stable application of decorations, which will be actually embedded in the material of the tubular layer, while preserving the quality of the hose even in case of use in dusty environments or in contact with abrasive surfaces.

As used herein, the term *"compatible materials"* or derivatives thereof shall be intended to indicate materials having a chemical and/or physical compatibility with each other, i.e. materials that, while in joined relationship, provide a junction adapted to support the transfer of tensile or shear stresses through the contact surface. The highest compatibility is thus achieved between identical materials or having the same matrix base.

As used herein, the term *"matrix"* of a polymer or derivatives thereof, shall be intended to indicate a polymer material that can provide the molecular structure of the final product.

The term *"decorative element"* or derivatives thereof shall be intended to indicate a figure or a fancy image that can be easily distinguished from the background in which it is formed and/or applied, not necessarily having a commercial or technical information purpose.

For the purposes of the present invention, a string of technical information or a simple pigmentation of the exposed surface, either uniform or not, are not a decorative element.

Also, for the purposes of the present invention, a simple rectilinear strip formed and/or applied on the exposed surface, either continuously or not, either of the same color as the exposed surface or not, either including or not a mark and/or a string of commercial information, is not a decorative element.

Preferably, the decorative elements may exclusively have an ornamental and/or decorative function and may be equal or different.

The decorative elements may be arranged over the exposed surface in a discontinuous fashion. Such discontinuous arrangement may be either uniform or not, which means that the distance between the decorative elements may be Substantially similar or not.

The hose may include any number of layers. For example, it may be a single-layer hose, or a layflat hose with or without inserts.

Particularly, in a preferred, non exclusive embodiment, the hose may include a fabric reinforcement layer, e.g. of knitted or braided type. This fabric layer may be interposed between the inner and exposed surfaces of the hose.

As used herein, the term "fabric layer" and the like shall be intended to designate a layer composed of at least two yarns or sets of yarns arranged over a substrate.

Preferably, the hose of the invention will be packaged in a package comprising at least one sheet layer of polymeric material, with the decorative layers facing towards it. Advantageously, such polymeric material will not be optically opaque at the decorative elements, for the latter to be recognized by the user therethrough.

In another aspect, the invention relates to a method for decorating flexible irrigation hoses, as defined in claim 8.

In a further aspect, the invention relates to a plant for implementing the method as defined in claim 16.

Advantageous embodiments of the invention are defined in accordance with the dependent claims.

### Brief description of the drawings

Further features and advantages of the invention will become more apparent from the detailed description of a few preferred, non exclusive embodiments of a hose of the invention and a plant for implementing same, which are described as non limiting examples with the help of the accompanying drawings in which:
FIGS. 1 to 3 are partially exploded perspective views of corresponding preferred embodiments of a hose of the invention;
FIG. 4 is a not-to-scale cross sectional view of a tape substrate having decorative elements for decorating the hose;
FIGS. 5 to 12 show respective configurations of a plant of the invention;
FIG. 13 is a schematic cross sectional view of a detail of a plant of to the invention.

### Detailed description of a preferred embodiment

Referring to the above figures, the hose 1 may be particularly suitable for garden use, as an irrigation hose.

In its basic form, the hose 1 may have an inner surface susceptible of contacting the liquid to be carried and a surface external thereto having a plurality of decorative elements that can be viewed from the outside by a user.

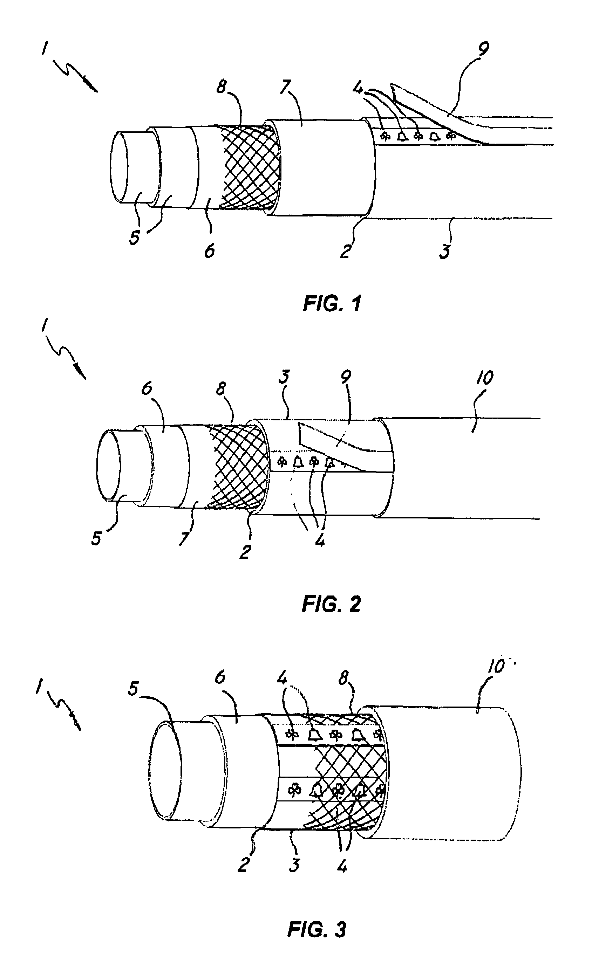

FIGS. 1 to 3 show respective details of a hose 1 of the invention, in a partially exploded configuration for showing its interior view.

In these configurations, the hose 1 has an outer tubular layer 2 with an outer surface 3 designed to be at least partially exposed in use, with a plurality of decorative elements stably associated therewith, generally designated by numeral 4, and also exposed.

The hose 1 may include one or more inner tubular layers 5, 6, 7, the innermost layer 5 being designed to contact a liquid to be carried, particularly water, and possibly formed of a material having a plasticized PVC-based matrix.

Nevertheless, the hose may also be formed of a single tubular layer 2, possibly covered by a clear layer.

One of the inner layers may have a fabric cover 8, e.g. of braided or knitted type, which may be formed by way of example and without limitation of polyester, polyamide, Kevlar or the like yarns, to impart improved strength or anti-kink properties to the hose.

The outer layer 2 may be formed of a first polymeric material, e.g. of the thermoplastic type, having a plasticized PVC-based matrix. Nevertheless, any other polymeric material that is deemed to be suitable will be applicable.

Preferably, the matrix of the thermoplastic polymeric material may include PVC with a K value (DIN 53726) close to 70.

Nevertheless, any other material may be used, according to the intended use of the hose. By way of example and without limitation any polymeric or thermoplastic rubber material may be used, not necessarily with a PVC-based matrix.

The innermost layer 5 may also preferably be formed of a thermoplastic polymeric material. Conveniently, the polymeric material of the inner layer 5 may have a higher Shore A hardness than the polymeric material of the outer layer 2.

Advantageously, the polymeric material of the inner layer 5 and/or the polymeric material of the outer layer 2 may have respective Shore A hardness values from 90 to 40. However, materials of different hardness may be also used.

As is known per se, the hose 1 of the invention may be formed by extrusion of a polymeric material to form the first inner layer 5, with additional layers, including the fabric layer 8, possibly formed on such first semifinished layer, and the first polymeric material being extruded on such second semifinished layer to form the outer tubular layer 2.

As shown in FIG. 2, the outer surface 3 of the outer tubular layer 2 will include a plurality of decorative elements 4 that can be viewed from the outside by a user, which are preferably applied or formed on its outer surface 3.

The decorative elements 4 may be equal or different and will be preferably spaced, more preferably equally spaced in a predetermined direction.

In one preferred embodiment, the decorative elements 4 will be arranged over the outer surface 3 of the tubular layer 2 in a longitudinal direction X substantially parallel to the direction of extension of the tubular layer 2.

Furthermore, the decorative elements 4 may be arranged on more than one longitudinal direction to define respective series substantially parallel to and angularly spaced from each other.

In a further variant embodiment, the decorative elements 4 may be placed over the outer surface 3 of the tubular layer 2 in wound arrangement.

The decorative elements 4 may be of any shape and/or size. Due to the provision of these decorative elements 4, the hose 1 will gain improved attractiveness and aesthetic value.

According to the invention, the decorative elements 4 are each composed of one or more sheet layers made of a second pigmented material, preferably compatible with that of the tubular layer 2.

For example, the sheet layers of the decorative elements 4 may be composed of at least one polymeric matrix with particles of organic or inorganic material dispersed therein. The matrix will be preferably chromatically neutral.

By way of example, the decorative elements 4 may be formed of a material having a matrix based on PVC, polyurethane or another material compatible with the material, e.g. PVC, of the outer tubular layer 2.

Due to the compatibility of the first and second materials, the decorative elements may be directly applied to the outer surface 3 of the tubular layer 2.

The decorative elements 4 may be each composed of two or more chromatically different sheet layers, defining respective images in at least partially overlapped relation, to define the final image of the corresponding decorative element 4.

Each sheet layer may be formed of a corresponding second pigmented material, preferably of polymeric nature and compatible with that of the sheet layers of the same decorative element 4.

Merely by way of example, vinyl-based inks may be used, possibly added with a binder, such as titanium dioxide or barium solfate.

Preferably, these inks may be of the type classified as non-toxic according to the UNI EN 71 standard, and preferably be of food grade.

Furthermore, they may be scratch-resistant, particularly by protection with a very high density polyethylene layer.

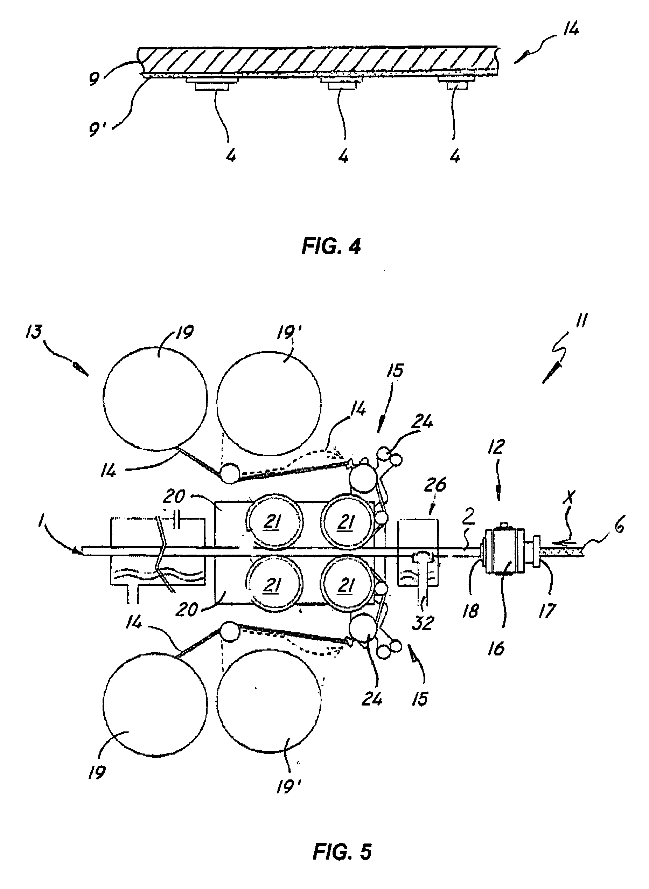

According to a further configuration, as schematically shown in FIG. 4, the decorative elements 4 may be associated with a substrate 9 on which the sheet layers will be arranged to define the decorative elements 4 according to the configuration to be obtained on the hose 1.

The substrate 9 will be preferably formed of a third polymeric material compatible with that of the tubular layer.

Preferably but without limitation, the third material of the substrate 9 will be also compatible with the second pigmented materials selected for the decorative elements 4.

Thus, the decorative elements 4 will be wholly integrated in the material of the tubular layer 2, thereby ensuring a longer life and a higher resistance even in particular environmental conditions or upon slipping of the hose 1 on hard or abrasive surfaces.

The hoses so obtained will be particularly suitable for use by children, as the decorative elements 4 will be hardly removable. Therefore, the hose 1 of the invention will ensure high safety as well as a long-lasting aesthetic value.

The hose 1 of the invention may further include a covering layer or film 10 which fully or partially wraps the periphery of the outer surface 3 of the tubular layer 2 and also covers the decorative elements 4.

The cover layer 10 will be preferably formed of a polymeric, e.g. thermoplastic material, which is optically transparent at least at the decorative elements 3, for an even more stable coupling of the latter with the tubular layer 2, without affecting the final aesthetic value.

Preferably, the cover layer 10 will be also tubular and wholly transparent.

The decorative elements may be applied to the outer surface 3 of the tubular layer 2 by hot or cold processes.

For example, they may be heat-applied to the surface 3 from a substrate 9 made of a material incompatible with the PVC of the outer tubular layer 2, such as polyester, with the sheet layers of the second pigmented material being laid thereon.

Thus, the hose 1 will be formed in a very simple, practical and cost-effective manner.

The substrate 9 of incompatible material may be also used in addition to a further compatible substrate as described above and designed to be integrated in the hose 1.

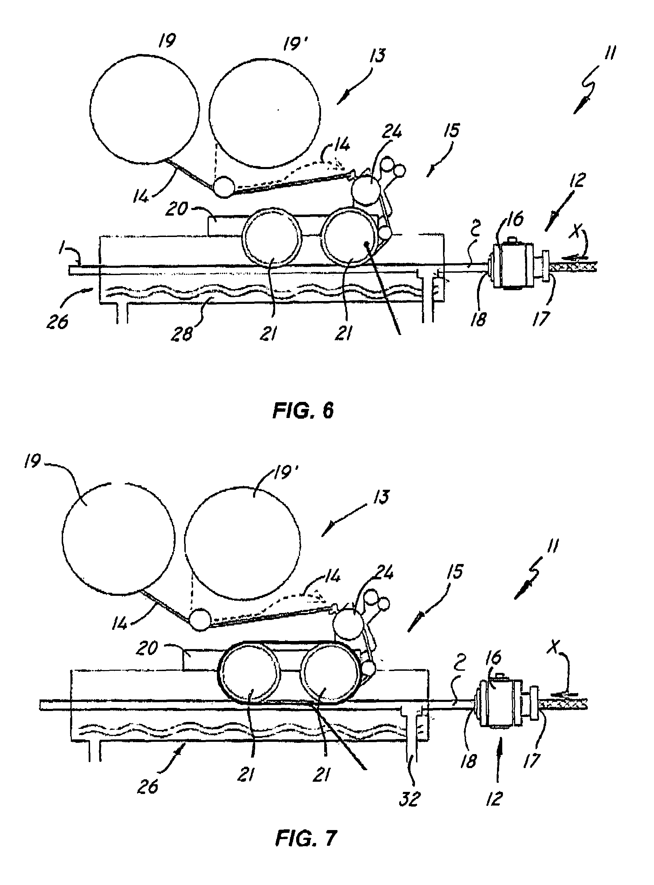

FIGS. 5 to 12 show a few preferred non exclusive embodiments of a plant for decorating irrigation hoses as described above.

Such system may be integrated or inserted downstream from a common extrusion system for flexible hoses, or any other system adapted for fabricating flexible hoses, particularly of the type designed for irrigation use.

A plant of the invention, generally designated by numeral 11, will basically include a station 12 for advancing a tubular layer 2 in a predetermined direction X, at least one station 13 for continuously feeding a strip 14 having a plurality of decorative elements 4 and at least one decoration station 15 in which the decorative elements 4 are applied to the outer surface 3 of the tubular layer 2.

In a first configuration, common to the plants of FIGS. 5 to 9, 11 and 12, the feeding station 12 will in tum include an extrusion head 16 with an inlet section 17 and an outlet section 18 for the tubular layer 2.

The extrusion head 16 may be the same extrusion head of the hose manufacturing system with which the plant 11 of the invention can be used.

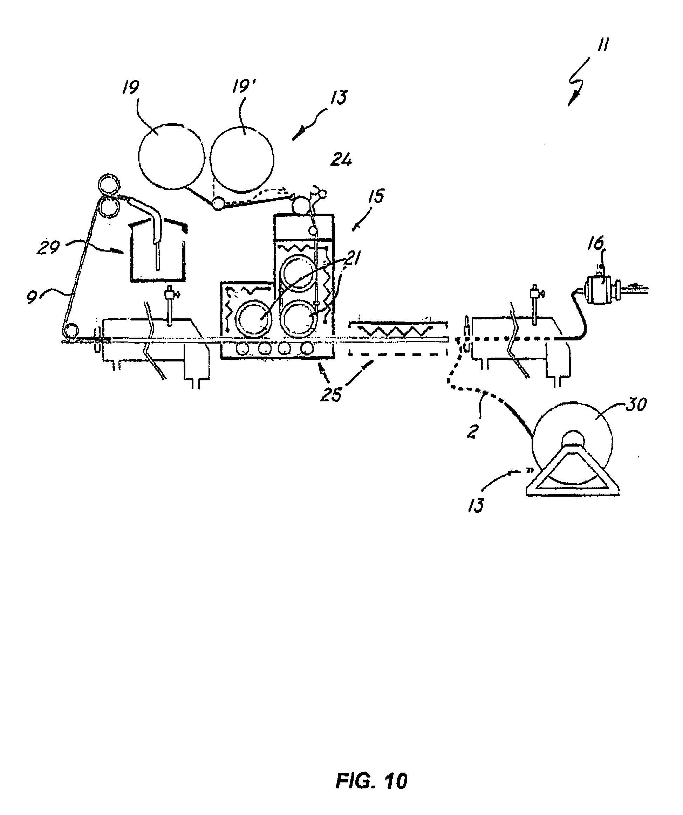

In a further configuration, as shown in FIG. 10, the advancing station 12 may include a take-off reel 30 in which the hose will be wound once it has been formed, using any method whatever.

Furthermore, as is already known in the art, the feeding station 12, whatever its configuration, will include a take-off unit, not shown and known per se. which is adapted to engage one end of the hose 1 to advance it at a predetermined outfeeding speed, which may be of any value, e.g. from 1 m/min to 150 m/min.

By way of example and without limitation to the invention, the strip 14 may include a substrate 9 with the decorative elements 4 arranged thereon.

The substrate 9 may be formed of any polymeric material, such as polyester, polypropylene, polyethylene, polyurethane, PVC, polyamide or even paper.

The selected material may be compatible with the polymeric material of the outer tubular layer 2, if the decorated substrate 9 is required to be integrated in the tubular layer 2, in which case it will be also conveniently compatible with the material of the decorative elements 4, or incompatible therewith, if it is designed for removal.

In the latter case, the substrate strip 14 may include a detaching layer 9' interposed between the substrate 9 and the decorative elements 4 to allow separation of the two adjacent layers.

Particularly, the detaching layer 9' will be made of a fourth material susceptible of being removed upon application of the strip 14.

For instance, the detaching layer 9' may be a wax, paraffin or a similar material, such as oxidized polyethylene, incompatible with both the second and third materials, and adapted to come off the strip 14, e.g. upon melting thereof.

In a first configuration, applicable to all illustrated configurations, the feeding station 13 for feeding the strip 14 may include at least one idle or powered feed reel 19, with the strip 14 to be applied to the outer layer 2 of the hose 1 extending therefrom.

Advantageously, the feeding station 13 will be configured to feed the strip 14 at the outlet section 18 of the extrusion head 16 at substantially the same feeding speed as the speed with which the hose 1 is advanced from the head 16.

The feeding station 13 may be also equipped with one or more backup reels 19' for high process continuity.

Also, more than one feeding station may be also provided, e.g. two substantially identical feeding stations 13, 13' located in diametrically opposite positions with respect to the tubular layer 2.

This will allow multiple separate series of decorative elements 4 to be simultaneously applied to the outer surface 3 of the outer tubular layer 2.

In the configurations as shown in FIGS. 5 to 8, the decoration station 18 will include at least one applicator 20 located directly downstream from the outlet section 18 of the extrusion head 16.

The applicator 20 will be designed to exert a predetermined sufficient pressure on the strip 14, to assist the transfer of the decorative elements 4 onto the outer surface 3 of the tubular layer 2.

In a first configuration, as shown in FIGS. 4, 5 and 6, the applicator 20 will include one or more presser elements 21 for pressing upon the strip 14.

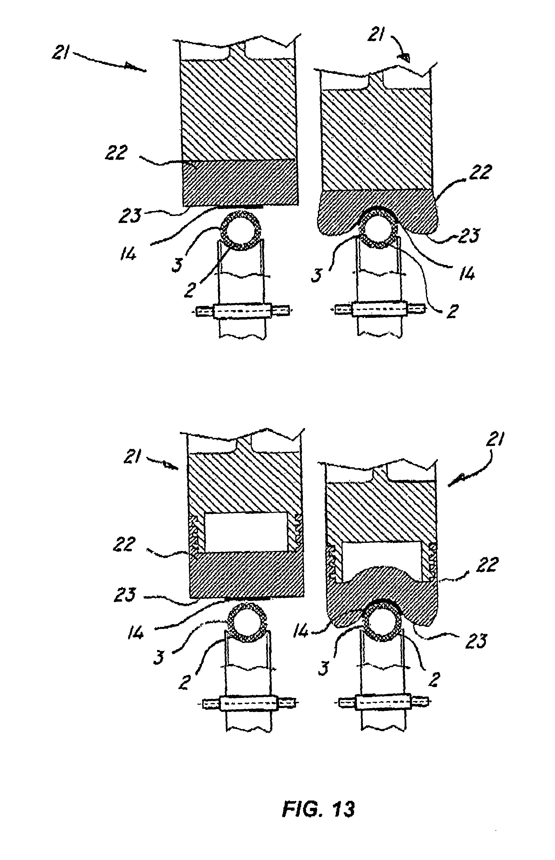

Advantageously, as more clearly shown in FIG. 13, each of the presser elements 21 will have a resilient outer cylindrical portion 22. For example, the presser elements 21 may be rollers made of a rubber or silicone material, with a lateral surface 23 designed to contact the strip 14 that comes from the feeding station 13.

The presser elements 21 will be further susceptible of being moved from a distal rest position, radially spaced from the tubular layer 2, as shown on the left side of FIG. 13, to a proximal operating position, as shown on the right side of the same figure, in which the resilient cylindrical portion 22 at least partially surrounds the tubular layer 2 with the strip 14 interposed between its lateral surface 23 and the outer surface 3 of the tubular layer 2.

This particular configuration will provide perfect adhesion of the strip 14 to the outer surface 3 of the tubular layer 2. The strip 14 will optimally adhere to a portion of the exposed surface 3 of the tubular layer 2, having a substantially the same circumferential extension as the width of the strip 14.

In order to facilitate this operation, an overpressure will be exerted inside the hose 1, e.g. by blowing compressed air therein, for the tubular layer 2 to provide increased resistance to the pressure exerted by the presser elements 21, thereby preventing any collapse of the material of the tubular layer 2 from affecting the processing quality.

The presser elements 21 may be either solid or hollow, for improved wrapping of the tubular layer 2.

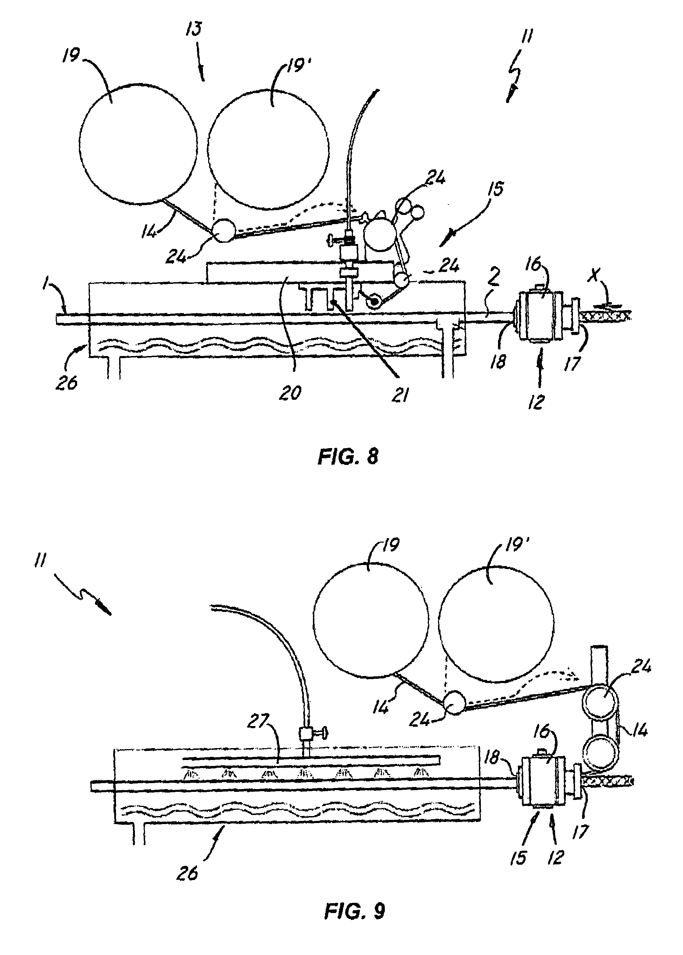

FIG. 8 shows a further configuration of the presser element 21, which consists of a multiple-nozzle device, adapted to convey a fluid jet onto the strip 14, such as air or water, preferably pre-heated at a temperature higher than ambient temperature, to facilitate adhesion to the tubular layer 2 and allow application of the decorative elements 4 thereon.

In a first configuration, as shown in FIGS. 5 to 9, the feeding station 13 will be designed to feed the strip 14 in a direction substantially parallel to the advance direction X of the tubular layer 2.

In this case, the reels 19, 19' will be preferably mounted in such positions as to rotate about respective axes substantially orthogonal to the advance direction X.

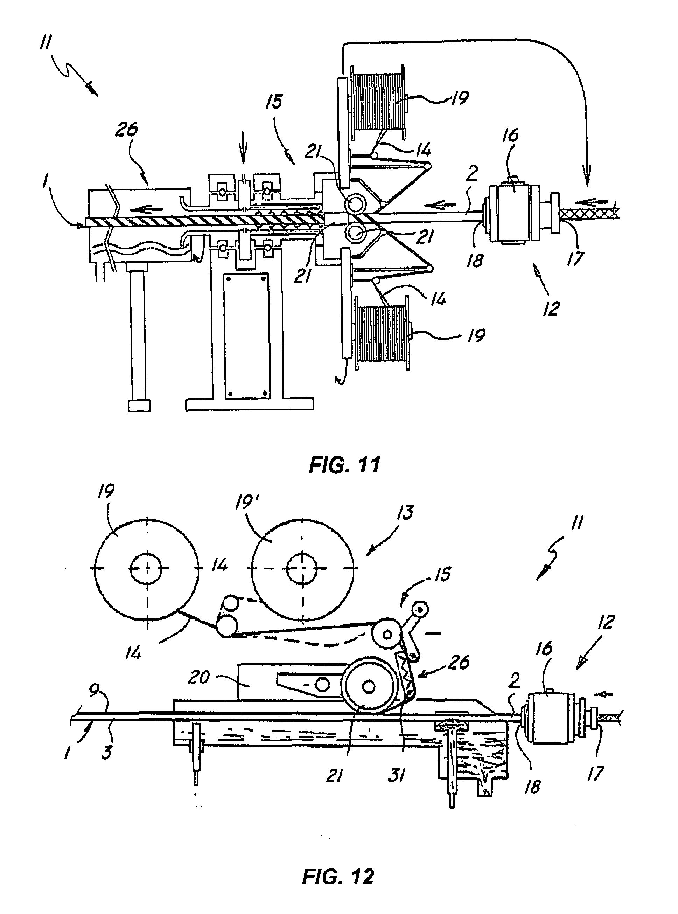

In a further configuration, as shown in FIG. 11. the feeding station 13 will be designed to feed one or more strips 14 along a spiral path, with the strips 14 simultaneously fed in respective longitudinal and radial directions.

In the illustrated arrangements, the strip 14 is transferred from the reel 19 to the presser elements 21, in a position suitable for application, by one or more preferably idle return rollers 24.

In any case, the presser rollers 21 may be either idle and frictionally driven by the strip 14 or power driven.

In this case, their rotation speed will help to set the feeding speed of the strip 14.

In the configuration of FIG. 9, the feeding station 13 will be designed to feed the strip 14 at the inlet section 17 of the extrusion head 16.

The decoration station 15 will be in turn integrated in the extrusion head 16 so that a tubular layer 2 equipped with the decorative elements 4 will be provided at its outlet.

The plant 11 may also include a station 25 for heating or pre-heating the strip 14 and/or a station 26 for cooling the tubular layer 2 with the decorative elements 4 thereon.

The heating station 25 for the substrate strip 14 will have the purpose of raising its temperature to a sufficient level as to allow stable transfer of the decorative elements 4 onto the outer surface 3 of the tubular layer 2.

For instance, in the configuration of FIG. 10, a pre-heating station 25 is provided directly downstream from the decoration station 15 and at least partially incorporating the latter.

By this arrangement, the presser elements 21 will be pre-heated and thus transfer heat to the substrate strip 14 to assist the transfer of the decorative elements 4 onto the tubular layer 2, with or without the substrate 14, depending on whether the materials in use are compatible or not.

In FIG. 12, the heating station 25 will include a plate 31 for direct-contact heating of the tape 14.

The heating station 25 may also be integrated in the decoration station 15, like in the case in which a fluid jet device 21 is used, with a heated working fluid.

Also, the presser rollers 21 may be also heated by resistors integrated therein.

Transfer temperatures may range from 20°C to 230°C.

Nevertheless, it may also be unnecessary to pre-heat the decorative elements 4, as the hose 1 is typically extruded at relatively high temperatures, more generally from 30°C to 230°C, according to the materials being used.

However, heating will be preferred as it will promote adhesion of the various materials, and activate the peel-off layer, thereby allowing the strip 14 and the tubular layer to be fed at high speeds.

Advantageously, application by pressure will only occur after pre-heating.

The cooling station 26 may be located downstream from the decoration station 15 to cool the tubular layer 2 associated with the decorative elements 4 and allow immediate storage of the outfed hose and/or upstream therefrom.

In this case, the cooling station 26 will include a device 32, e.g. a bubbler, which will cool the lower portion of the tubular layer 2 to impart a higher resistance to the pressure exerted thereon by the presser element.

The cooling station 26 may also include a plurality of nozzles 28 for directing respective cooling fluid jets to the decorated hose 1.

Instead or in addition to the above, a cooling tank 28 may be provided below the portion of the hose to be cooled, the latter sliding therein at least partially dipped in the cooling fluid.

The system 11 may be complemented by a station 29 for removal and recovery of any portion of strip 14 made of a material incompatible with that of the tubular layer 2.

The above description clearly shows that the invention fulfils the intended objects.

The hose system and method of the invention are susceptible to a number of changes or variants, within the inventive concept disclosed in the appended claims. All the details thereof may be replaced by other technically equivalent parts, and the materials may vary depending on different needs, without departure from the scope of the invention.

While the hose, system and method have been described with particular reference to the accompanying figures, the numerals referred to in the disclosure and claims are only used for the sake of a better intelligibility of the invention and shall not be intended to limit the claimed scope in any manner.

## Claims

1. A flexible irrigation hose comprising at least one tubular layer (2) made of a first polymeric material having an outer surface (3) with a plurality of decorative elements (4) stably associated therewith, **characterized in that** said decorative elements (4) consist of at least one layer made of a second pigmented material.

2. Hose as claimed in claim 1, **characterized in that** said second pigmented material is compatible with said first polymeric material of said tubular layer.

3. Hose as claimed in claim 1 or 2, **characterized in that** said at least one second pigmented material is of polymeric type.

4. Hose as claimed in any preceding claim, **characterized in that** said decorative elements (4) are constituted by a plurality of layers composed of corresponding second pigmented materials defining corresponding images in at least partially overlapped relation.

5. Hose as claimed in one or more of the preceding claims, **characterized in that** said decorative elements (4) also comprise at least one substrate film or layer (9) made of a third polymeric material, said one or more layers being deposited thereon, said third polymeric material being compatible with at least said first material of said tubular layer (2).

6. Hose as claimed in any preceding claim, **characterized in that** said decorative elements (4) are arranged in at least one longitudinal and/or transverse direction, relative to the direction of extension of said tubular layer (2).

7. A method of manufacturing irrigation hoses as claimed in one or more of the preceding claims, comprising the steps of:
a) continuously advancing at least one tubular layer (2) made of a first polymeric material in a predetermined longitudinal direction (X);
b) feeding at least one strip (14) having at least one substrate layer (9) with a plurality of decorative elements (4) arranged thereon;
c) applying said strip (14) to the outer surface (3) of said tubular layer (2) thereby stably applying said decorative elements (4) thereon;
wherein said support layer (9) and/or said decorative elements (4) are made of corresponding materials compatible with that of said at least one tubular layer (2).

8. Method as claimed in claim 7, **characterized in that** said substrate (9) of said strip (14) is made of a material that is incompatible with the one of said tubular layer (2), said strip (14) comprising at least one detaching layer (9') interposed between said support layer (9) and said decorative elements (4) and being susceptible of being removed upon application of said strip (14) to said tubular layer (2).

9. Method as claimed in claim 7 or 8, **characterized in that** said step (b) of applying said decorative elements (4) comprises a step of heating said strip (14) and/or said tubular layer (2) to a predetermined transfer temperature.

10. Method as claimed in any claim 7 to 9, **characterized in that** said step (b) of applying said decorative elements (4) comprises a step of exerting a predetermined pressure upon said strip (14) for facilitating the transfer of said decorative elements (4) to said outer surface (3) of said tubular layer (2).

11. Method as claimed in any claim 7 to 10, **characterized in that** said step (a) of advancing said tubular layer (2) includes a step of extrusion thereof by an extrusion head (16) having an inlet section (17) and an outlet section (18), said strip (14) being fed through said inlet section (17) to be applied to said outer surface (3) of said tubular layer (2) substantially at the same time as the latter is extruded from said outlet section (18).

12. A plant for decorating irrigation hoses, wherein the system (11) is designed to implement a method as claimed in one or more of claims 8 to 14, comprising:
- an advancing station (12) for advancing a hose (1) having at least one tubular layer (2) with an outer surface (3):
- at least one feeding station (13, 13') for continuously feeding a strip (14) with a plurality of decorative elements (4);
- at least one decoration station (15) for applying said decorative elements (4) to said outer surface (3) of said tubular layer (2).

13. Plant as claimed in claim 12, **characterized in that** said decoration station (15) comprises at least one presser element (21) having at least one outer resilient cylindrical portion with a lateral surface (23) designed to contact said strip (14), said presser element (21) being susceptible of being moved between a rest position distal relative to said tubular layer (2) and a proximal operating position, in which said resilient cylindrical portion (22) at least partially surrounds said tubular layer (2) with said strip (14) interposed between said lateral surface (23) and the outer surface (2) of said tubular layer (2).

14. Plant as claimed in claim 13, **characterized in that** said advancing station (12) comprises an extrusion head (16) with an inlet section (17) and an outlet section (18) for the tubular layer (2), said applicator (20) being located directly downstream from said outlet section (18).

15. Plant system as claimed in claim 12 or 13, **characterized in that** said advancing station (12) comprises an extrusion head (16) with an inlet section (17) and an outlet section (18), said feeding station (13) being designed to feed the strip (14) into said inlet section (17), said decoration station (15) being integrated in said extrusion head (12).
